(19) Europäisches Patentamt
European Patent Office
Office européen des brevets

(11) **EP 3 957 977 B1**

(12) # EUROPEAN PATENT SPECIFICATION

(45) Date of publication and mention of the grant of the patent:
**30.08.2023 Bulletin 2023/35**

(21) Application number: **19730860.4**

(22) Date of filing: **18.04.2019**

(51) International Patent Classification (IPC):
***G01N 15/14*** *(2006.01)* ***G01N 21/64*** *(2006.01)*

(52) Cooperative Patent Classification (CPC):
**G01N 15/1404;** G01N 15/1459; G01N 21/6486; G01N 2015/1413; G01N 2015/1486; G01N 2201/0625

(86) International application number:
**PCT/ES2019/070270**

(87) International publication number:
**WO 2020/212628 (22.10.2020 Gazette 2020/43)**

(54) **FLUIDIC APPARATUS FOR OPTICAL INTERROGATION OF INDIVIDUAL MICROORGANISMS**

FLUIDISCHE VORRICHTUNG ZUR OPTISCHEN INTERROGATION EINZELNER MIKROORGANISMEN

APPAREIL FLUIDIQUE POUR L'INTERROGATION OPTIQUE DE MICROORGANISMES INDIVIDUELS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.02.2022 Bulletin 2022/08**

(73) Proprietors:
- **Fundació Institut de Ciències Fotòniques 08860 Castelldefels (Barcelona) (ES)**
- **Institució Catalana de Recerca I Estudis Avançats 08010 Barcelona (ES)**

(72) Inventors:
- **PRUNERI, Valerio 08860 Castelldefels, Barcelona (ES)**
- **JOFRE, Marc 08860 Castelldefels, Barcelona (ES)**
- **MARTÍNEZ CORDERO, Pedro Antonio 08860 Castelldefels, Barcelona (ES)**

(74) Representative: **Grünecker Patent- und Rechtsanwälte PartG mbB Leopoldstraße 4 80802 München (DE)**

(56) References cited:
**EP-A1- 3 467 472**
**WO-A1-2018/223132**
**US-A1- 2013 256 561**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 957 977 B1

## Description

### Field of Invention

The present invention relates to an apparatus for focusing flowing micro-organisms allowing the detection of optical emission from a sample, particularly, individual members of a sample, as well as a corresponding method.

### Background of the invention

Detecting and analyzing micro-organisms is of importance in a variety of technical fields. Pulse-amplitude-modulation (PAM) fluorometers, flow cytometers and optical microscopy techniques are widely used in combination with fluorescence labeling for the analysis of biological micro-organisms (microalgae, bacteria, etc...). However, the particular techniques mentioned-above only offer accurate readings of a sub-set of measureable complementary biological parameters. For example, flow cytometers offer confident counting of present organisms and viability readings while PAM fluorometers offer precise reaction curves, photosynthetic activity and biological stress levels. Although optical microscopes allow for measuring a broad range of the parameters expressed above, they are of limited use for analyzing samples with very low concentrations of micro-organisms. They offer only a qualitative and poorly representative analysis because of the small field of view analyzed as compared with the entire sample volume. Furthermore, optical microscopy is suitable for laboratory studies but not for on-site measurements in the field. For example, optical microcopy has limited use in industrial plants and in the context of environmental water, food and drink quality testing. Thus, there is a need for a technology that allows for quantitative and representative analysis and measuring the range of parameters provided by the apparatuses mentioned above. Moreover, at the same time a portable solution for on-site measurements is needed.

Furthermore, the use of suspensions of micro-organisms in PAM fluorometers causes the problem of maintaining a homogeneous sample while reading and/or dealing with highly concentrated samples. Concentrations can vary from a few microorganisms per ml to $10^9$ microorganisms per ml. On the one hand, the accuracy of the results obtained by the measurements, in principle, can be affected by relatively high concentrations of micro-organisms. On the other hand, at low concentrations of micro-organisms it is encountered the difficulty of measurement because of the rapid depositing of relatively large (more than 10 $\mu$m in diameter) micro-organisms. Some PAM fluorometers are marketed with an optional accessory for stirring the sample within a cuvette while being in the emitter-detector volume. A stirring means can help to prevent cells from settling out of the suspension over the time-course of fluorescence measurements. However, complications while measuring highly concentrated samples, which produce masking effects to the optical signals, are not addressed by this method.

The PAM approach uses light pulses of 3000 to 10 000 mmol photons $m^{-2}$ $s^{-1}$ to modify fluorescence yields. Fast-repetition rate (FRR) PAM measures changes in fluorescence emission that occur during a short but intense light flash of 420 000 mmol photons $m^{-2}$ $s^{-1}$. Both PAM and FRR PAM fluorometers can be used to determine a range of fluorescence biological parameters.

By measuring the fluorescence levels resulting from different light pulses in real-time, active measures of detailed photochemistry are accessible. Energy absorbed from photons can be transferred to photochemistry, fluorescence, heat or other endpoints. Hence, when photochemistry is high, fluorescence is low. For instance, with $F_0$ denoting the fluorescence yield in the dark, when all reaction centers are open (mainly photochemistry), and $F_m$ denoting the fluorescence yield when all reaction centers are closed (mainly fluorescence), $(F_m-F_0)/F_m$ represents the efficiency of photosystem II, which could be defined as the fraction of absorbed photons whose energy is used in photosynthesis processes.

When micro-organisms flow inside a capillary channel, the channel has to be properly designed with respect to the dimensions and geometries of the same. In particular, the flow characteristic can be further controlled by sheath-flow focusing. The boundary layer effects of viscose fluids give rise to a boundary layer sheath flow and a relatively independent relatively ideal central flow. Inertial particle focusing within the capillary channel can be achieved by the proper choice of channel dimensions, channel geometry and the flow rate through the capillary channel.

Inertial and elasto-inertial microfluidics, using Newtonian and non-Newtonian fluid, respectively, can provide further efficient single-particle flows in the center of the capillary channel and cell focusing that guarantees optimal sensitivity and accuracy in capillaries at a cost of throughput. Focusing by inertial microfluidics relies on the balance between shear-lift and wall-interaction forces, present in fluids at Reynolds numbers of about Re = 1 - 100. Elasto-inertial microfluidics can provide further single-stream focusing at the center of straight channels only at moderate low fluid speeds.

Elasto-inertial microfluidics can be prepared by additives comprising biological or synthetic polymeric powders. For example, a 500 ppm polyethylene oxide (PEO) solution can be used to cause particles to be focused into a single-stream at the center of the channel (one particle flows after the other without flowing neighbored particles being present). In principle, focusing is achieved under specific conditions which depend on the flow rate, Reynolds number and ratio of the particle sizes to the channel diameter. Increasing the PEO concentration improves slightly the focusing and further reduces the flow rate, because of the relatively high pressure drop in the capillary channel.

Moreover, machine artificial intelligence methods for data analysis can be applied to the detected signals provided by the above mentioned devices. The algorithms can be unsupervised, reinforced and supervised learning techniques.

WO 2018/223132 A1 relates to systems and methods for oscillatory focusing of particles in channels and discloses the preamble of claim 1.

It is an object of the present invention to provide a portable apparatus which allows focusing the micro-organisms flow into a particular region for the detection of optical emission from a sample, in particular, individual members of a sample of micro-organisms that alleviates the above-mentioned problems and, in particular, allows for accurately and quantitatively measuring and analyzing a plurality of biological parameters from a sample comprising micro-organisms.

**Description of the Invention**

The present invention addresses the above-mentioned problems by providing an apparatus which focuses the flow of micro-organisms for the detection of optical (for example, fluorescence, scattering) emission (optical signals) from individual members of a sample (although not restricted to the detection of fluorescence and/or scattering emission from individual members only). The apparatus comprises an optical device including a light source configured to emit light in a first direction to individual members (microorganisms) of the sample and a detection device configured to detect optical emission (optical signals) from the individual members (micro-organisms) emitted in a second direction opposite to the first direction and excited by the light emitted by the light source. The apparatus, furthermore, comprises a fluid device including a storage reservoir/tank configured to store the sample of micro-organisms and a pumping device, for example, a circulation pump, configured to circulate the sample of micro-organisms in the storage tank. A control means is configured to control the pumping device to produce pressure variations in the flow which change the velocity profile of the flow in a time period shorter than or about the time in which the fluid would reach a steady state before the pressure changes again (see also details on the aspect of pressure variations/pulses) described below). In other words, the pumping device is configured to generate a pulsed flow of a portion of the sample of micro-organisms through the capillary channel.

A capillary channel is arranged in the storage tank configured to allow a flow of individual members of the sample such that one individual member only is present in the first field of view of the detection device at a given time of detection of the optical signal emission. The field of view corresponds to a particular portion of the capillary channel onto that the excitation light is radiated. The size of the field of view can be less than two times the diameters of typical micro-organisms of the sample. The capillary channel may extend in a direction perpendicular to the first direction. Suspended particles in a medium can be caused to flow along the capillary channel that may have at least one cross-sectional dimension smaller or about 100 $\mu$m and a longitudinal dimension larger than or about 10 mm.

For example, the excitation light is focused on a small excitation region located around a longitudinal axis of the capillary channel and well limited in the direction of this longitudinal axis such that one single micro-organism only can be present in that region at a given time. For this purpose, the optical device can have some collimation optics configured and arranged to focus light emitted by the light source onto the small excitation region that is located in the capillary channel. Data processing means of analyzing data provided by the detection device may be provided. Detected fluorescent events and scattering events can be correlated in post-processing in order to properly count only the population of events showing a unique fluorescence-scattering signature and discard others, in this way reducing significantly false positive counts that are produced, for example, by air bubbles, debris or similar artifacts. The thus specified apparatus allows for accurately measuring and analyzing a plurality of biological parameters from individual micro-organisms of a sample.

The apparatus may comprise a data processing device and algorithm for extracting parameters of the detected optical emission, wherein a concurrent analysis of the extracted parameters allows for adjusting any control parameters of operation of the apparatus, for example, pressure variations, flow rates, etc.

According to an embodiment, the detection device is additionally configured to detect in a second field of view different from the first field of view optical emission emitted in a third direction from a portion of the sample of micro-organisms stored in the storage tank. The second field of view is larger than the first field of view and covers a region, in particular, a central region, in the storage tank different from a region covered by the first field of view. In this embodiment, some optics is provided in order to achieve the different fields of view. For example, the optical device of the apparatus may comprise a first lens configured and arranged to focus light emitted by the light source into the capillary channel and a second lens configured and arranged to focus light emitted by the light source into a region of the storage tank different from the capillary channel, in particular, in a central region of the storage tank.

The optical device may be configured for continuously emitting a light beam or for emitting light pulses. In particular, the optical device may be configured to perform PAM fluorometry or FRR PAM fluorometry up to frequency of a few hundreds of MHz, for example. Accordingly, the detection device can be configured to have bandwidths from DC to a few hundreds of MHz.

In order to achieve a high sensitivity, the detection device may be provided with a microscope objective. The optical device of the apparatus, thus, may further comprise a microscope objective or other collimation optics configured and arranged to guide the optical signal emission that is to be detected toward a sensing surface of the detection device.

To allow for the detection of biological signatures while individual micro-organisms pass the field of view in the capillary channel, the flow of the individual micro-organisms through the capillary channel can be suitably controlled. Moreover, the geometry and dimensions of the capillary channel can be selected such that a flow of the individual members through the capillary channel allows for the detection of biological signatures while one single individual member of the sample is in the first field of view / excitation region in the capillary channel.

The circulation pump or any other extra pumping device allows for flow rate control, in a modulated fashion and active correction, in particular, to have a pulsed flow which allows for the manipulation of the hydrodynamic velocity profile inside the capillary channel which minimizes the later diffusion of the microorganisms out of the central line of the capillary due to the steady-state inertia forces imposed by the flow velocity profile. In an embodiment the flow device may comprise a fluid pump or combination of fluid pumps, for example, a bi-directional PID controlled peristaltic pump and a micro-dosage bi-directional pump.

Harmonically oscillating flow rates arises due to the pulsed pressure. From a physical standpoint, the fluid flow experiences both viscous resistance and inertia, the latter being due to the pulsations. This is in contrast to the steady-state Poiseuille paraboloid velocity profile wherein only viscous resistance is present.

The dimensionless Womersley number $\alpha = \sqrt{\left(h/2\right)^2 \omega/\nu}$ where h is the relevant hydraulic height of the channel, $\omega$ is the angular frequency of the oscillations and $\nu$ $\upsilon$ is the kinematic viscosity, may be interpreted as the inertial relaxation time at which the fluid reaches the steady state in response to an instantaneous change in the driving pressure. A critical Womersley number is given by $\alpha_c = \alpha/\gamma_1$ where $\gamma_1$ is the first root of the zeroth order Bessel function which equals 2.4048 and $\alpha_c$ measures the fluid relaxation time in response to the rate of change of the pressure oscillation. For $\alpha_c < 1$ the fluid at all times reaches a steady state before changes happen to the pressure, and the fluid flow is quasi-steady. For $\alpha_c > 1$ the fluid does not reach a steady state before the pressure changes, and inertia becomes important. For $\alpha_c > 1$ the flow still has inertia acting in the opposite direction when the pressure gradient is reversed. Consequently, it will take some time before the pressure gradient can change the direction of the inertia. This introduces a phase shift between the fluid motion and the pressure gradient. However, at the confinement walls, the no-slip boundary condition enforces very low velocities with correspondingly low inertia such that fluid elements close to the walls have a smaller phase shift than fluid elements in the center of the confinement. At $\alpha_c$ larger or around 5 a full $\pi$ phase shift is observed between the flow close to the walls and that at the center, forming a "fluidic skin effect" or annular region. The width of this region is given by the momentum diffusion length $\lambda_d$ which can be found from the diffusivity of momentum and the characteristic time $\omega^{-1}$ as $\lambda_d = \sqrt{\nu/\omega}$. The parabolic velocity profile in this annular region supports the notion that the flow here remains quasi-static for $\alpha_c > 1$. According to an embodiment the critical Womersley number for the flow of a portion of the sample of micro-organisms flowing through the capillary channel is larger than 1. Furthermore, the elastic forces acting on the flow of the micro-organisms through the capillary channel means can be further controlled by adding visco-elastic polymers. Therefore, the fluid device of the apparatus may comprise means configured to supply a dosage of visco-elastic polymers to the sample stored in or supplied to the storage tank of the fluid device.

The light source may comprise coherent laser light, e.g. a laser diode or incoherent light, e.g. LED. Alternatively, the light source may comprise some other device. An excitation filter may be arranged between the light source and the storage tank if an LED device is used as the light source in order to provide for the appropriate excitation wavelengths. The detection device of the optical device may be a sensitive photomultiplier detector, APD, photon counter (e.g. multi-pixel photon counter), or complementary metal-oxide semiconductor, CMOS, sCMOS, eeCMOS, image sensor device or CCD sensor device, for example. The optical device may further comprise programmable data processing means for processing data provided by the detection device.

According to a particular embodiment, the micro-organisms comprise chloroplasts and the apparatus comprises data processing means connected to the detection device and configured to determine the efficiency of the photosystem II of the chloroplasts based on data provided by the excitation of the light source and detection device. The inventive apparatus can function as a cytometer and, particularly, as a device for investigating or analyzing chlorophyll activity.

Furthermore, it is provided a method of detecting optical (for example, fluorescence or scattering) emission (optical signals) from individual members of a sample of microorganisms. It comprises the steps of preparing the sample of micro-organisms and guiding a portion of the sample of micro-organisms through a capillary channel such that one single micro-organism only is present at a central portion (in particular, central about a longitudinal axis of the capillary channel) of the capillary channel at a given time, radiating in a first direction excitation light to only the central portion of the capillary channel at the given time in order to excite optical emission from the one single microorganism and detecting the excited optical emission by a detection device, the excited optical emission being emitted by the single micro-organism at the given time in a second direction opposite to the first direction. The excitation light can be radiated, for example, by a PAM light source, in a pulse-modulated manner, in particular, a pulse-amplitude-modulated manner. The central region can be sized in all dimensions such that no more than one micro-organism can be present in that region at a given time.

The sample of micro-organisms may be stored in a storage tank, the storage tank comprising the capillary channel and being operatively connected to a pumping device, for example, a circulation pump, and the preparing of the sample of micro-organisms may comprise adding a synthetic polymeric powder to the sample before storing it in the storage tank or to the sample stored in the storage tank.

According to an embodiment, the method is not restricted to the detection of biological signatures while individual micro-organisms pass the first field of view in the capillary channel one after the other but also comprises radiating in the first direction another excitation light to a portion, in particular, a central portion, of the storage tank wherein the capillary channel is not arranged in order to excite another optical signal emission from a portion of the sample of micro-organisms (located in the irradiated portion of the tank). The portion comprises a plurality of micro-organisms. According to this embodiment the method also comprises detecting the other optical emission excited in the portion of the sample of micro-organisms by the detection device, wherein the other optical emission excited in the portion is emitted in the second direction opposite to the first direction.

The above-described embodiments of the inventive method may be used for the investigation of chloroplasts and they may comprise determining the efficiency of the photosystem II of the chloroplasts based on data provided by the detection device.

According to the invention, the pumping device is operated to generate a pulsed flow of the portion of the sample of micro-organisms through the capillary channel.

Furthermore, according to the invention, the critical Womersley number for the flow of the portion of the sample of micro-organisms through the capillary channel is larger than 1.

The above-described embodiments of the inventive method may be performed by one of the embodiments of the inventive apparatus described above. In all of the above-described embodiments of the inventive method and the inventive apparatus the detected data can be processed by artificial intelligence algorithms (for example with machine learning techniques). Post-processing aims to analyze the optical signals (from fluorescence and scattering events acquired in the detector), translate them in optical signatures (based on the amplitude and duration of the events), generate and perform training of models, characterize and match the acquired signals with models of target microorganism populations and distinguish them from signatures of spurious artifacts (different of target microorganism) in the sample, allowing to discard spurious signals population and minimize the false positives counts. The above-described method steps can be performed by the apparatus according to one of the above-described embodiments.

Additional features and advantages of the present invention will be described with reference to the drawings. In the description, reference is made to the accompanying figures that are meant to illustrate preferred embodiments of the invention. It is understood that such embodiments do not represent the full scope of the invention.

**Brief description of the drawings**

Figure 1 schematically illustrates a system for focusing flowing particles and optically interrogating individual members of a sample in accordance with an exemplary embodiment of the invention,.

Figure 2 is a pictorial depiction of the fluid flow velocity profiles for two different pulsed flowing conditions.

Figure 3 is a collection of graphs showing experimental values of the detection of different sized polystyrene microspheres particles (histogram of the peak values of detected voltages) in a liquid solution. The bars indicate the frequencies of occurrence.

Figure 4 illustrates a method of detecting optical emission from individual members of a sample of micro-organisms according to an embodiment of the present invention.

Figure 5 schematically illustrates an apparatus comprising an optical device including a light source and a detection device and further comprising a fluid device including a sample storage tank wherein a capillary channel is formed according to an embodiment of the present invention.

Figure 6 illustrates an investigation of photosystem II activity by a method according to an embodiment of the present invention.

## Description of specific embodiments of the invention

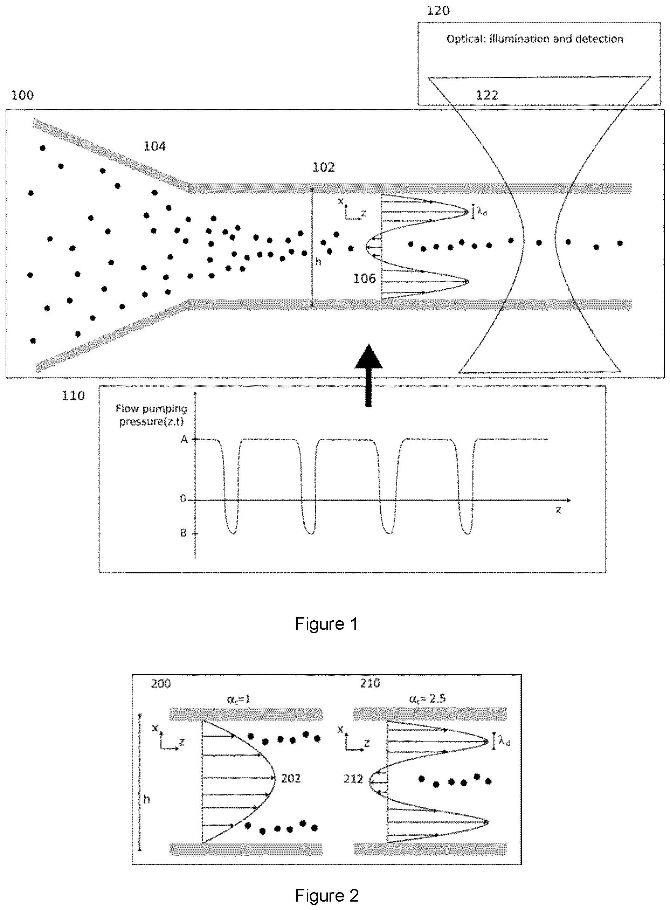

The present invention provides an apparatus that allows for focusing micro-organisms for an accurate detection of optical emission (optical signals) from individual members of a sample. Figure 1 illustrates an embodiment of such an apparatus 100 with a pulsed driving pressure (see 110 in Figure 1) and an optical illumination/detection apparatus 120. In order to achieve hydrodynamic focusing using the pulsed regime $\alpha_c$ has to be larger than 1 and at least one period of the pulsation has to be propagating inside the channel to largely avoid the generation of turbulence in the channel. The period T of the pulses is equal to the linear flow speed divided by the pulsed frequency.

For example, in the apparatus 100 the channel 102 is about 50 mm in length and a squared cross-section has dimensions of 75 $\mu$m. A linear liquid flow 110 with a speed of 0.1 meters per second and a pulsed frequency of 10 Hz may be applied In this case, the Womersley number is 4.85, the critical Womersley is around 2.02 and the period of the propagating pulsation is 10 mm. Furthermore, the entry 104 to the capillary channel can have a conical shape to allow for reducing turbulence transition into the capillary channel.

The applied flow pressure 110 allows for the fluid to have a positive net transport with a baseline pressure level indicated by A. At given pulsed frequency the pressure is rapidly reversed in direction indicated with a negative level B. However, over the entire pressure cycle a positive fluid flow momentum is maintained.

The generated flow velocity profile 106 is not a paraboloid but rather a depression is formed in the center of the velocity profile 102 in the capillary channel. The velocity profile is further explained below. A single stream of micro-organisms is flowing in the center of the capillary channel which allows for individually detecting the micro-organisms by means of an optical technique. In particular, the optical apparatus 120 has means to generate a narrow illumination and detection spot 122.

Hence, an oscillatory or pulsed flow regime (presumed to be laminar and incompressible) in a capillary channel allows for focusing the micro-organisms in the center of the channel capillary.

Specifically, in Figure 2 the physical flowing phenomena are first explained for a non-focusing micro-organisms regime 200, where $\alpha_c$=1. The axial velocity profile for a liquid with no-slip boundary condition driven by a pressure difference in a channel is indicated by 202. The velocity profile 202 represents a Poiseuille paraboloid. The fluid at all times reaches a steady state before changes happen to the pressure. The velocity profile forces the particles to be located around 0.6 times the half height cross-section of the center of the channel. Then, in Figure 2 the physical observations are illustrated for a focusing micro-organisms regime 210 where $\alpha_c$= 2.5. The effect of inertia on the velocity profile is clearly observable for $\alpha_c$ > 1 by the deviation from the Poiseuille paraboloid 212. The diffusion length $\lambda_d = \sqrt{\upsilon/\omega}$ ($\upsilon$ denotes the fluid velocity and $\omega$ denotes the pulse frequency) giving the width of the quasi-steady annular region is indicated. The fluid does not reach a steady state before the pressure changes and inertia becomes important. The velocity profile deviation from a paraboloid allows for particles being focused around the center of the channel.

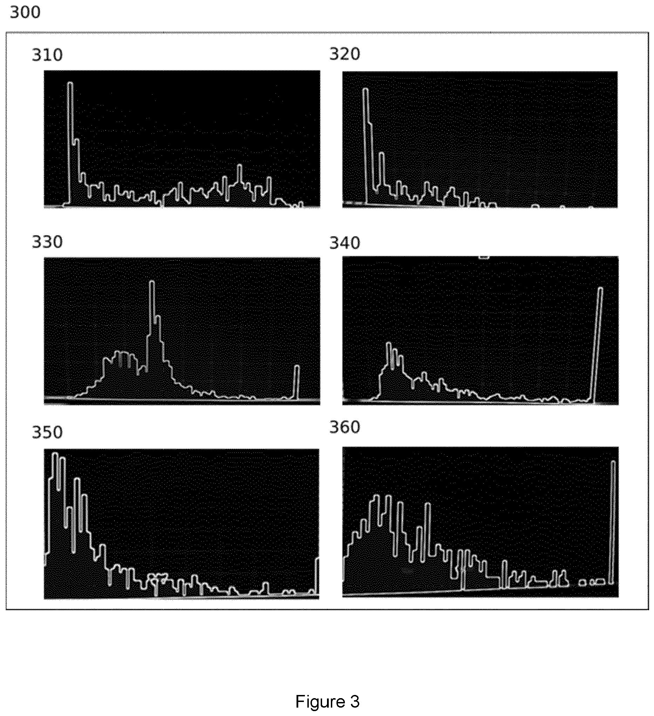

For the purpose of explanation, Figure 3 shows data measured experimentally and presented in the form of voltage histograms. The horizontal axes (the scaling is not representative) represent the voltage bins of the height of the detected optical pulses. The vertical axes represent the normalized frequencies of occurrence so that the most probable voltage values are clearly identified. Reference sign 310 designates a histogram for 50 $\mu$m particle beads in a pulsed flow regime obtained using apparatus 100. Reference sign 320 designates a histogram of 50 $\mu$m particle beads in a non-pulsed flow regime. Reference sign 330 designates a histogram of 10 $\mu$m particle beads in a pulsed flow regime obtained using apparatus 100. Reference sign 340 designates a histogram of 10 $\mu$m particle beads in a non-pulsed flow regime. Reference sign 350 designates a histogram of 2 $\mu$m particle beads in a pulsed flow regime obtained using apparatus 100. Reference sign 360 designates a histogram of 2 $\mu$m particle beads in a non-pulsed flow regime.

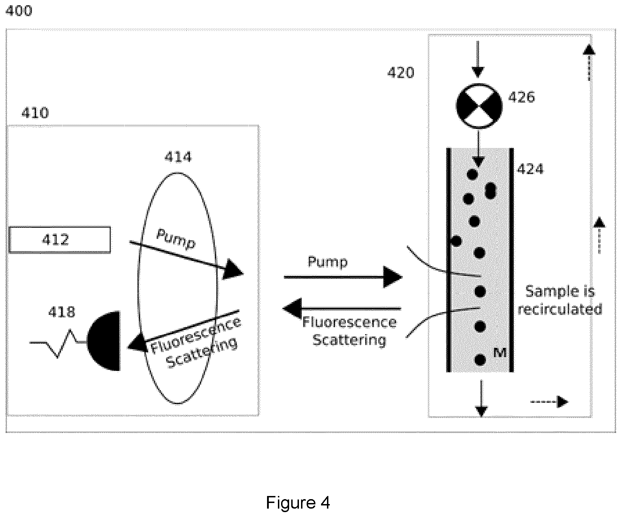

The apparatus 400 shown in Figure 4 comprises an optical device 410 and a fluid device 420 for providing a sample S comprising micro-organisms M. The optical device 410 comprises a light source 412, for example, comprising a laser device. In general, wavelengths from the ultraviolet to the infrared range of the light spectrum depending on the excitation wavelength required for each specific application. Output powers of a few mW may be chosen.

Light emitted in a first direction by the light source 412 is collimated by a lens 414. Further, a detection device 418 is provided in order to detect fluorescence emission excited in the sample S. The detection device 418 is arranged to detect fluorescence emission or scattering emission radiated in a second direction that is opposite to the first direction. The detection device 418 may be a sensitive photodiode (APD, photomultiplier, multi-pixel photon counter), CCD sensor device or an image sensor device, and it may be equipped with an interferential filter or/and an absorption filter.

The fluid device 420 providing the sample S comprises a capillary channel 424 which is a small tube of a circular or square cross section and may comprise plastic, glass, or fused quartz (for UV light) material and may be designed to allow fluid to flow along the longitudinal axis of the channel. The capillary channel 424 may have a relevant hydraulic height of about 100$\mu$m, for example.

Due to the operation of the circulation pump 426, operating as in apparatus 100, a continuous or pulsed flow of the sample S for testing the same can be provided. It goes without saying that the circulation pump 426 may operate on a portion of an entire sample or on the entire sample.

The collimation lens 414 of the optical device 410 focuses the light emitted by the light source 412 of the optical device 410 into the capillary channel 424, for example, a central portion of the capillary channel 424. The capillary channel 424 may extend in a direction substantially perpendicularly to the optical axis of the first collimation lens 414. The central portion corresponds to the narrow field of view (for example, with a diameter of a few microns) of the detection device 418 of the optical device 410.

Moreover, the flow of micro-organisms M through the capillary channel 424 is controlled such that the one micro-organism that is detected at a given time in the field of view.stays long enough (for example, a few hundred $\mu$s) in the field of view in order to have the detection device 418 detecting desired biological signatures from the microorganism (see also description below). Thus, the biological signatures of individual micro-organisms can be detected independently of the concentration of the micro-organisms M in the sample S and a plurality of parameters can be derived from the detection results given by the detection device 418 by means of some data processing means. The fluorescence emission from the micro-organism depends on the actual biological vitality. Examples of the parameters *inter alia* comprise reaction curves, photosynthetic activity and biological stress levels.

The optical device 410 of apparatus 400 can be configured to perform PAM fluorometry or FRR PMA fluorometry up to frequency of a few hundreds of MHz, for example. In this configuration, the apparatus 400 is, particularly, suitable for the investigation of photosynthesis. By studying the fluorescence yield arising from phytoplankton chlorophyll, for example, one can determine many characteristics related to other internal processes of the chlorophyll cells. In the context of PAM fluorometric investigations on photosynthesis of chlorophyll cells (chloroplasts) the detection device 418 can gather information on two levels of light, namely, low and high levels.

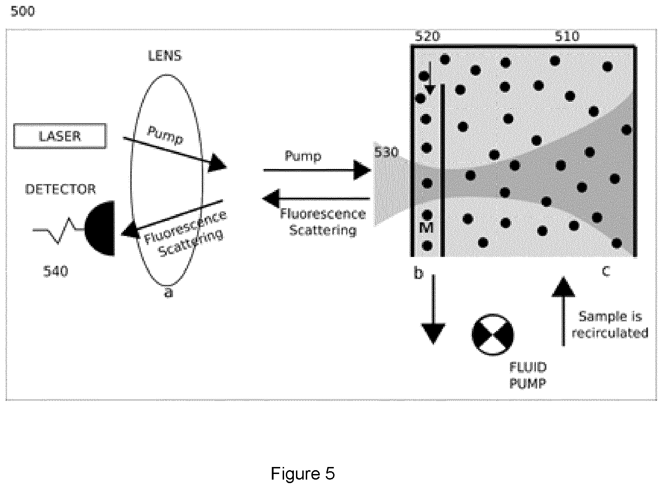

Figure 5 illustrates an apparatus of detecting optical emission from individual members of a sample of micro-organisms according to an embodiment of the present invention. A sample comprising a plurality of micro-organisms is prepared and it is stored in a reservoir 510. Preparation of the sample may partially be performed in that reservoir. Preparation of the sample of micro-organisms may comprise filtering and/or purifying a raw sample, for example, by means of concentration filters and an appropriate chemistry including, for example, acids, flocculators, etc.). Particulate concentrators in the form of disposable ultrafiltration devices with polymer membranes may be used for the concentration and/or purification of biological raw samples in order to prepare the sample.

A portion of the prepared sample is supplied to a capillary channel 520 formed in the reservoir. A portion of the capillary channel 520 is irradiated by light 530 from a light source (for example, a laser) emitting excitation light towards the capillary channel 520 in a first direction. The excitation light is focused to the portion of the capillary channel 520 by some collimation optics, for example, comprising a lens.

The excitation light causes optical emission from a micro-organism (thanks to its auto fluorescence behavior or because it has been labelled with a reagent having fluorochromes) being present in an excitation region of the capillary channel 520 that is irradiated by the light source. The capillary channel 520 and the flow through the capillary channel are designed such that only a single one of the plurality of micro-organisms is present in the portion of the capillary channel 520 that is irradiated by the light source at a given time of detection, i.e., the excitation region. At the given time of detection, the excited optical emission (optical signals) of the single micro-organism is detected by a detection device 540. The optical emission may be detected via some collimation optics, for example, a microscope objective. The optical emission detected by the detection device 540 is radiated in a second direction opposite to the first direction of emission of the excitation light. Subsequently, biological parameters can be derived from the detected optical emission.

As already mentioned, a portion of the prepared sample is supplied to the capillary channel 520 formed in the reservoir 510. The flow through the capillary channel 520 should be controlled such that only a single one of the plurality of micro-organisms is present in the portion of the capillary channel 520 that is irradiated by the light source at a given time of the detection device 540. The flow, in addition, has to be slow enough to allow for the detection of a meaningful biological signature from the micro-organism. To achieve such a flow a circulation pump is properly controlled to operate in order to supply a portion of the sample to the capillary channel 520.

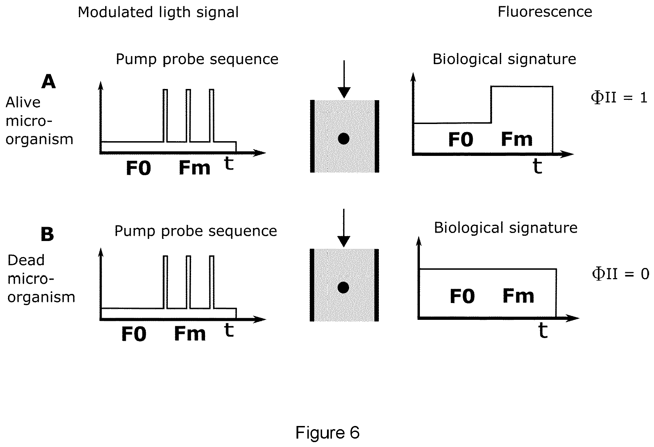

In particular, measurements can be performed based on the PAM technique. Investigations on photosynthesis of chlorophyll cells, for example, can be carried out by the described operation. In this context Figure 6 shows an exemplary time sequence of optical interrogation by PAM measurements for two cases of detected biological signatures corresponding to $F_0$ being the fluorescence yield in the dark, when all reaction centers are open (mainly photochemistry), and $F_m$ being the fluorescence yield when all reaction centers are closed (mainly fluorescence).

In operation of the apparatus 500 shown in Figure 5, modulated excitation light (pump wave) can be radiated (see left column of Figure 6) on a particular single micro-organism (chlorophyll cell) being in a target portion / excitation region (shown in the middle column of Figure 6) of the capillary channel corresponding to a field of view of the detection device. Pump probing sequences with alternating $F_0$ and $F_m$ are shown in both rows of Figure 6 (left column). In the shown example, the total optical probe sequence may have a duration of about 500 μs and the detection time needed for observing a biological signature concurrent with the illumination is also about 500 μs. Furthermore, the probing optical beam diameter and the field of view are about 50 μm. The linear flow speed of the individual micro-organisms through the capillary channel can suitably be adjusted to 0.1 m/s, for example. By using visco-elastic polymers it is made possible to focus, in the fluid, micro-organisms in the center of the capillary channel.

The response/biological signature as detected from the excited fluorescence emission of the micro-organism (chlorophyll cell) is shown in the right column of Figure 6. In the case of a detected living organism a signature indicating a photochemical efficiency $\Phi_{II} = 1$ is observed (upper row of Figure 6) whereas in the case of a detected dead organism a signature indicating a photochemical efficiency $\Phi_{II} = 0$ (equal levels of $F_0$ and $F_m$) is observed (lower row of Figure 6). The organisms that are present in the sample can be counted individually when they are passing the above-mentioned portion of the capillary channel / field of view of the detection device.

All previously discussed embodiments are not intended as limitations but serve as examples illustrating features and advantages of the invention. It is to be understood that some or all of the above-described features can also be combined in different ways.

## Claims

**1.** An apparatus for the detection of optical emission from individual members of a sample of micro-organisms, comprising

an optical device including a light source configured to emit light in a first direction to individual members of the sample and a detection device configured to detect in a first field of view optical emission from the individual members emitted in a second direction opposite to the first direction and excited by the light emitted by the light source; and

a fluid device including a storage reservoir configured to store the sample of microorganisms, a pumping device, in particular, a circulation pump, configured to circulate the sample of micro-organisms in the storage tank and wherein a capillary channel is arranged in the storage tank configured to allow a flow of individual members of the sample such that one individual member only is present in the field of view of the detection device at a given time of detection of the optical emission,

a control means configured to control operation of the pumping device to produce pressure variations in the flow which change the velocity profile of the flow in a time period shorter than or about the time in which the fluid would reach a steady state before the pressure changes again, **characterised in that** the critical Womersley number for the flow of the portion of the sample of micro-organisms flowing through the capillary channel is larger than 1, wherein the critical Womersley number is defined as the Womersley number divided by the first root of the zeroth order Bessel function which equals 2.4048.

**2.** The apparatus according to claim 1, further comprising

a data processing device and algorithm for extracting parameters of the detected optical emission, wherein a concurrent analysis of the extracted parameters allows for adjusting any control parameters of operation of the apparatus and reduction of false positive counts by means of artificial intelligence algorithms, in particular, machine learning algorithms; wherein a) the geometry and dimensions of the capillary channel are selected and b) the control means is configured to control operation of the pumping device such that that a flow of the individual members through the capillary channel allows for the detection of biological signatures while one single member of the sample only is in the first field of view.

**3.** The apparatus according to one of the preceding claims, wherein the detection device is additionally configured to detect in a second field of view different from and larger than the first field of view other optical emission emitted in the second direction from a portion of the sample of micro-organisms stored in the storage tank.

**4.** The apparatus according to claim 3, wherein the optical device further comprises a first lens configured and arranged to focus light emitted by the light source into a particular region of the capillary channel and a second lens configured and arranged to collect light emitted by the micro-organisms of the storage tank different from the capillary channel, in particular, in a central region of the storage tank.

**5.** The apparatus according to one of the preceding claims, wherein the optical device is configured to perform pulse-amplitude-modulation fluorometry or fast-repetition-rate pulse-amplitude-modulation fluorometry.

**6.** The apparatus according to one of the preceding claims, wherein the optical device further comprises a microscope objective arranged to guide the optical emission toward a sensing surface of the detection device.

**7.** The apparatus according to one of the preceding claims, further comprising means configured to supply a dosage of visco-elastic polymers to the sample.

**8.** The apparatus according to one of the preceding claims, wherein the micro-organisms comprise chloroplasts, and further comprising data processing means connected to the detection device and configured to determine the efficiency of the photosystem II of the chloroplasts based on data provided by the detection device.

**9.** Method of detecting optical emission from individual micro-organisms of a sample of micro-organisms, comprising the steps of:

preparing the sample of micro-organisms;
guiding a portion of the sample of micro-organisms through a capillary channel such that one single micro-organism only is present at a central portion of the capillary channel at a given time;
radiating in a first direction excitation light to only the central portion of the capillary channel at the given time in order to excite optical emission from the one single micro-organism; and
detecting the excited optical emission by a detection device, the optical emission being detected in a second direction opposite to the first direction; and
wherein the guiding of the portion of the sample of micro-organisms through the capillary channel comprises moving the portion of the sample of micro-organisms by means of a pumping device, in particular, a circulation pump;
wherein the pumping device is operated to generate a pulsed flow of the portion of the sample of micro-organisms through the capillary channel , wherein the pulses change the velocity profile of the flow in a time period shorter than or about the time in which the fluid would reach a steady state before the pressure changes again;
**characterised in that**
the critical Womersley number for the flow of the portion of the sample of microorganisms flowing through the capillary channel is larger than 1, wherein the critical Womersley number is defined as the Womersley number divided by the first root of the zeroth order Bessel function which equals 2.4048.

**10.** The method according to claim 9, wherein the excitation light is radiated in a pulse-modulated manner, in particular, a pulse-amplitude-modulated manner.

**11.** The method according to claim 9, further comprising storing the sample of microorganisms in a storage tank, the storage tank comprising the capillary channel and being operatively connected to the circulation pump.

**12.** The method according to claim 11, wherein the preparing of the sample of microorganisms comprises adding a synthetic polymeric powder to the sample before storing it in the storage tank or to the sample stored in the storage tank.

**13.** The method according to one of the claims 11 and 12, further comprising

radiating in the first direction another excitation light to a portion, in particular, a central portion, of the storage tank wherein the capillary channel is not arranged in order to excite other optical emission from a portion of the sample of microorganisms, the portion comprising a plurality of micro-organisms; and
detecting the other optical emission excited in the portion of the sample of microorganisms.

**14.** The method according to one of the claims 9 to 13, wherein the micro-organisms comprise chloroplasts and further comprising determining the efficiency of the photosystem II of the chloroplasts based on data provided by the detection device.

**15.** The method according to one of the claims 9 to 13, wherein the method steps are performed by the apparatus according to one of the claims 1 to 8.

**Patentansprüche**

**1.** Eine Vorrichtung zum Detektieren einer optischen Emission von Individuen einer Probe von Mikroorganismen, umfassend

eine optische Einrichtung mit einer Lichtquelle, die dazu ausgebildet ist, Licht in eine erste Richtung zu Individuen der Probe auszusenden, und einer Detektionseinrichtung, die dazu ausgebildet ist, in einem ersten Sichtfeld eine optische Emission von den Individuen, die in eine zweite, der ersten Richtung entgegengesetzten, Richtung und angeregt durch das von der Lichtquelle ausgesendete Licht ausgesendet wird, zu detektieren; und
eine Fluideinrichtung mit einem Speicherreservoir, das dazu ausgebildet ist, die Probe von Mikroorganismen zu speichern, einer Pumpeinrichtung, insbesondere einer Umwälzpumpe, die dazu ausgebildet ist, die Probe von Mikroorganismen in dem Speicherreservoir umzuwälzen, und wobei in dem Speicherreservoir ein Kapillarkanal angeordnet ist, der dazu ausgebildet ist, eine Strömung von Individuen der Probe derart zu ermöglichen, dass in dem Sichtfeld der Detektionseinrichtung zu einer vorgegebenen Detektionszeit der optischen Emission lediglich ein Individuum präsent ist, einer Steuerungseinrichtung, die dazu ausgebildet ist, einen Betrieb der Pumpeinrichtung zu steuern, um Druckvariationen in der Strömung zu erzeugen, die das Geschwindigkeitsprofil der Strömung in einer Zeitdauer ändern, die kleiner oder ungefähr gleich der Zeit ist, in der das Fluid einen stationären Zustand erreichen würde, bevor sich der Druck wieder ändert,

**dadurch gekennzeichnet, dass**

die kritische Womersley-Zahl der Strömung des Teils der Probe von Mikroorganismen, die durch den Kapillarkanal strömen, größer als 1 ist, wobei die kritische Womersley-Zahl als die Womersley-Zahl dividiert durch die erste Wurzel der Bessel-Funktion 0-ter Ordnung, die gleich 2,4048 ist, definiert ist.

**2.** Die Vorrichtung gemäß Anspruch 1, weiterhin umfassend

eine Datenverarbeitungseinrichtung und einen Datenverarbeitungsalgorithmus zum Extrahieren von Parametern der detektierten optischen Emission, wobei eine gleichzeitige Analyse der extrahierten Parameter ein Anpassen jeglicher Steuerparameter des Betriebs der Vorrichtung und eine Verringerung von Falsch-Positiv-Zählungen mithilfe von Algorithmen künstlicher Intelligenz, insbesondere, Algorithmen maschinellen Lernens, ermöglicht;

wobei a) die Geometrie und die Abmessungen des Kapillarkanals so gewählt sind und b) die Steuerungseinrichtung ausgebildet ist, den Betrieb der Pumpeinrichtung so zu steuern, dass eine Strömung der Individuen durch den Kapillarkanal die Detektion biologischer Signaturen, während lediglich ein Individuum der Probe sich in dem ersten Sichtfeld befindet, ermöglicht.

**3.** Die Vorrichtung gemäß einem der vorhergehenden Ansprüche, wobei die Detektionseinrichtung zusätzlich dazu ausgebildet ist, in einem zweiten Sichtfeld, das von dem ersten Sichtfeld verschieden und größer als dieses ist, eine weitere optische Emission zu detektieren, die von einem Teil der Probe von Mikroorganismen, die in dem Speicherreservoir gespeichert sind, in der zweiten Richtung ausgesendet wird.

**4.** Die Vorrichtung gemäß Anspruch 3, wobei die optische Einrichtung weiterhin eine erste Linse, die dazu ausgebildet und angeordnet ist, Licht, das von der Lichtquelle ausgesendet wird, in einem bestimmten Bereich des Kapillarkanals zu fokussieren, und eine zweite Linse, die dazu ausgebildet und angeordnet ist, Licht, das von den Mikroorganismen des Speicherreservoirs, die von denjenigen des Kapillarkanals verschieden sind, insbesondere in einem Zentralbereich des Speicherreservoirs, ausgesendet wird, zu sammeln, umfasst.

**5.** Die Vorrichtung gemäß einem der vorhergehenden Ansprüche, wobei die optische Einrichtung dazu ausgebildet ist, eine Puls-Amplituden-Modulation-Fluorometrie oder eine Fast-Repetition-Rate-Puls-Amplituden-Modulation-Fluorometrie auszuführen.

**6.** Die Vorrichtung gemäß einem der vorhergehenden Ansprüche, wobei die optische Einrichtung weiterhin ein Mikroskopobjektiv umfasst, dass so angeordnet ist, dass es die optische Emission zu einer Detektionsoberfläche der Detektionseinrichtung leitet.

**7.** Die Vorrichtung gemäß einem der vorhergehenden Ansprüche, weiterhin ein Mittel umfassend, das dazu ausgebildet ist, der Probe eine Dosis visko-elastischen Polymers zuzudosieren.

**8.** Die Vorrichtung gemäß einem der vorhergehenden Ansprüche, wobei die Mikroorganismen Chloroplast umfassen, und weiterhin eine Datenverarbeitungseinrichtung umfassend, die mit der Detektionseinrichtung verbunden und dazu ausgebildet ist, die Effizienz des Photosystems II des Chloroplasts auf der Grundlage von von der Detektionseinrichtung gelieferten Daten zu bestimmen.

**9.** Verfahren zum Detektieren einer optischen Emission von Individuen einer Probe von Mikroorganismen, die Schritte umfassend:

Bereiten der Probe von Mikroorganismen;

Leiten eines Teils der Probe von Mikroorganismen durch einen Kapillarkanal derart, dass in einem Zentralbereich des Kapillarkanals zu einer vorgegebenen Zeit lediglich ein Individuum präsent ist;

Aussenden eines Anregungslichts in eine erste Richtung zu lediglich dem Zentralbereich des Kapillarkanals zu der vorgegebenen Zeit, um eine optische Emission von dem einen Individuums anzuregen; und

Detektion der angeregten optischen Emission durch eine Detektionseinrichtung, wobei die optische Emission in einer zweiten, der ersten Richtung entgegengesetzten, Richtung detektiert wird; und

wobei das Leiten des Teils der Probe von Mikroorganismen durch den Kapillarkanal Bewegen des Teils der Probe von Mikroorganismen mithilfe einer Pumpeinrichtung, insbesondere einer Umwälzpumpe, umfasst, wobei die Pumpeinrichtung so betrieben wird, dass sie eine gepulste Strömung des Teils der Probe von Mikroorganismen durch den Kapillarkanal erzeugt, wobei die Pulse das Geschwindigkeitsprofil der Strömung in einer Zeitdauer ändern, die kleiner oder ungefähr gleich der Zeit ist, in der das Fluid einen stationären Zustand erreichen würde, bevor sich der Druck wieder ändert,
**dadurch gekennzeichnet, dass**
die kritische Womersley-Zahl der Strömung des Teils der Probe von Mikroorganismen, die durch den Kapillarkanal strömen, größer als 1 ist, wobei die kritische Womersley-Zahl als die Womersley-Zahl dividiert durch die erste Wurzel der Bessel-Funktion 0-ter Ordnung, die gleich 2,4048 ist, definiert ist.

**10.** Das Verfahren gemäß Anspruch 9, in dem das Anregungslicht in einer puls-modulierten Weise, insbesondere einer puls-amplituden-modulierten Weise, ausgesendet wird.

**11.** Das Verfahren gemäß Anspruch 9, weiterhin Speichern der Probe von Mikroorganismen in einem Speicherreservoir umfassend, wobei das Speicherreservoir den Kapillarkanal umfasst und operativ mit der Umwälzpumpe verbunden ist.

**12.** Das Verfahren gemäß Anspruch 11, in dem das Bereiten der Probe von Mikroorganismen Zusetzen eines synthetischen Polymerpulvers zu der Probe vor dem Speichern derselben in dem Speicherreservoir oder zu der in dem Speicherreservoir gespeicherten Probe umfasst.

**13.** Das Verfahren gemäß einem der Ansprüche 11 und 12, weiterhin umfassend

Aussenden eines weiteren Anregungslichts in die erste Richtung zu einem Bereich, insbesondere einem Zentralbereich, des Speicherreservoirs, in dem der Kapillarkanal nicht angeordnet ist, sodass eine weitere optische Emission von einem Teil der Probe von Mikroorganismen angeregt wird, wobei der Teil mehrere Mikroorganismen umfasst; und
Detektieren der weiteren optischen Emission, die in dem Teil der Probe von Mikroorganismen angeregt wird.

**14.** Das Verfahren gemäß einem der Ansprüche 9 bis 13, in dem die Mikroorganismen Chloroplast umfassen, und weiterhin Bestimmen der Effizienz des Photosystems II des Chloroplasts auf der Grundlage von von der Detektionseinrichtung gelieferten Daten umfassend.

**15.** Das Verfahren gemäß einem der Ansprüche 9 bis 13, in dem die Verfahrensschritte durch die Vorrichtung gemäß einem der Ansprüche 1 bis 8 ausgeführt werden.

**Revendications**

**1.** Appareil pour la détection de l'émission optique de éléments individuels d'un échantillon de micro-organismes, comprenant

un dispositif optique comprenant une source de lumière configurée pour émettre de la lumière dans une première direction vers des éléments individuels de l'échantillon et un dispositif de détection configuré pour détecter dans un premier champ de vision l'émission optique des éléments individuels émise dans une deuxième direction opposée à la première direction et excitée par la lumière émise par la source de lumière ; et
un dispositif à fluide comprenant un réservoir de stockage configuré pour stocker l'échantillon de micro-organismes, un dispositif de pompage, en particulier une pompe de circulation, configuré pour faire circuler l'échantillon de micro-organismes dans le réservoir de stockage et dans lequel un canal capillaire est disposé dans le réservoir de stockage configuré pour permettre un écoulement des éléments individuels de l'échantillon de sorte qu'un seul élément individuel soit présent dans le champ de vision du dispositif de détection à un moment donné de la détection de l'émission optique,
un moyen de commande configuré pour contrôler le fonctionnement du dispositif de pompage afin de produire des variations de pression dans l'écoulement qui modifient le profil de vitesse de l'écoulement dans un laps de temps inférieur ou proche du temps pendant lequel le fluide atteindrait un état stable avant que la pression ne change à nouveau,
**caractérisé en ce que** et dans lequel le nombre critique de Womersley pour l'écoulement de la partie de l'échantillon de micro-organismes s'écoulant dans le canal capillaire est supérieur à 1, dans lequel le nombre critique de Womersley est défini comme le nombre de Womersley divisé par la racine première de la fonction de Bessel d'ordre zéro, qui est égal à 2,4048.

**2.** Appareil selon la revendication 1, comprenant en outre

un dispositif de traitement des données et un algorithme permettant d'extraire les paramètres de l'émission optique détectée, dans lequel l'analyse simultanée des paramètres extraits permet d'ajuster les paramètres de contrôle du fonctionnement de l'appareil et de réduire le nombre de faux positifs au moyen d'algorithmes d'intelligence artificielle, en particulier d'algorithmes d'apprentissage automatique ;
dans lequel a) la géométrie et les dimensions du canal capillaire sont sélectionnées et b) le moyen de contrôle est configuré pour contrôler le fonctionnement du dispositif de pompage de manière à ce qu'un écoulement d'éléments individuels à travers le canal capillaire permette la détection de signatures biologiques alors qu'un seul élément de l'échantillon se trouve dans le premier champ de vision.

**3.** Appareil selon l'une des revendications précédentes, dans lequel le dispositif de détection est en outre configuré pour détecter, dans un deuxième champ de vision différent du premier champ de vision et plus large que celui-ci, une autre émission optique émise dans la deuxième direction à partir d'une partie de l'échantillon de micro-organismes stocké dans le réservoir de stockage.

**4.** Appareil selon la revendication 3, dans lequel le dispositif optique comprend en outre une première lentille configurée et agencée pour concentrer la lumière émise par la source lumineuse dans une région particulière du canal capillaire et une deuxième lentille configurée et agencée pour collecter la lumière émise par les micro-organismes du réservoir de stockage à l'écart du canal capillaire, en particulier dans une région centrale du réservoir de stockage.

**5.** Appareil selon l'une des revendications précédentes, dans lequel le dispositif optique est configuré pour effectuer une fluorométrie à modulation d'amplitude d'impulsion ou une fluorométrie à modulation d'amplitude d'impulsion à taux de répétition rapide.

**6.** Appareil selon l'une des revendications précédentes, dans lequel le dispositif optique comprend en outre un objectif de microscope conçu pour guider l'émission optique vers une surface de détection du dispositif de détection.

**7.** Appareil selon l'une des revendications précédentes, comprenant en outre des moyens configurés pour fournir un dosage de polymères viscoélastiques à l'échantillon.

**8.** Appareil selon l'une des revendications précédentes, dans lequel les micro-organismes comprennent des chloroplastes, et comprenant en outre des moyens de traitement des données connectés au dispositif de détection et configurés pour déterminer l'efficacité du photosystème II des chloroplastes sur la base des données fournies par le dispositif de détection.

**9.** Procédé de détection de l'émission optique de micro-organismes individuels d'un échantillon de micro-organismes, comprenant les étapes consistant à :

préparer l'échantillon de micro-organismes ;
guider une partie de l'échantillon de micro-organismes à travers un canal capillaire de manière à ce qu'un seul micro-organisme soit présent dans une partie centrale du canal capillaire à un moment donné ;
irradier dans une première direction la lumière d'excitation vers la partie centrale du canal capillaire au moment donné afin d'exciter l'émission optique d'un seul micro-organisme ; et
détecter l'émission optique excitée par un dispositif de détection, l'émission optique étant détectée dans une deuxième direction opposée à la première direction ; et
dans lequel le guidage de la partie de l'échantillon de micro-organismes à travers le canal capillaire consiste à déplacer la partie de l'échantillon de micro-organismes au moyen d'un dispositif de pompage, en particulier une pompe de circulation ;
dans lequel le dispositif de pompage est utilisé pour générer un écoulement pulsé de la partie de l'échantillon de micro-organismes à travers le canal capillaire, dans lequel les impulsions modifient le profil de vitesse de l'écoulement dans un laps de temps inférieur ou proche du temps pendant lequel le fluide atteindrait un état stable avant que la pression ne change à nouveau ;
**caractérisé en ce que** le nombre critique de Womersley pour l'écoulement de la partie de l'échantillon de micro-organismes s'écoulant dans le canal capillaire est supérieur à 1, dans lequel le nombre critique de Womersley est défini comme le nombre de Womersley divisé par la racine première de la fonction de Bessel d'ordre zéro, qui est égale à 2,4048.

**10.** Procédé selon la revendication 9, dans lequel la lumière d'excitation est émise de manière modulée par impulsions, en particulier de manière modulée par l'amplitude des impulsions.

**11.** Procédé selon la revendication 9, comprenant en outre le stockage de l'échantillon de micro-organismes dans un réservoir de stockage, le réservoir de stockage comprenant le canal capillaire et étant relié de manière opérationnelle à la pompe de circulation.

**12.** Procédé selon la revendication 11, dans lequel la préparation de l'échantillon de micro-organismes comprend l'ajout d'une poudre polymère synthétique à l'échantillon avant de le stocker dans le réservoir de stockage ou à l'échantillon stocké dans le réservoir de stockage.

**13.** Procédé selon l'une des revendications 11 et 12, comprenant en outre les étapes consistant à

irradier dans la première direction une autre lumière d'excitation vers une partie, en particulier une partie centrale, du réservoir de stockage dans lequel le canal capillaire n'est pas disposé afin d'exciter une autre émission optique d'une partie de l'échantillon de micro-organismes, la partie comprenant une pluralité de micro-organismes ; et
détecter l'autre émission optique excitée dans la partie de l'échantillon de micro-organismes.

**14.** Procédé selon l'une des revendications 9 à 13, dans lequel les micro-organismes comprennent des chloroplastes et comprenant en outre la détermination de l'efficacité du photosystème II des chloroplastes sur la base des données fournies par le dispositif de détection.

**15.** Procédé selon l'une des revendications 9 à 13, dans lequel les étapes du procédé sont exécutées par l'appareil selon l'une des revendications 1 à 8.

120

Optical: illumination and detection

100

122

104

102

$\lambda_d$

h

106

110

Flow pumping pressure(z,t)

A

0

B

z

Figure 1

200
$\alpha_c$=1
210
$\alpha_c$= 2.5
x
z
h
202
212
$\lambda_d$


Figure 2

300
310
320
330
340
350
360

Figure 3

400
420
426
410
414
424
412
Pump
Pump
Sample is recirculated
418
Fluorescence Scattering
Fluorescence Scattering
M

Figure 4

500
LENS
LASER
Pump
DETECTOR
Fluorescence
Scattering
540
a
Pump
Fluorescence
Scattering
530
520
510
M
b
c
Sample is
recirculated
FLUID
PUMP

Figure 5

Modulated ligth signal
Fluorescence
Pump probe sequence
Biological signature
A
Alive micro-organism
F0
Fm
t
F0
Fm
t
ΦII = 1
B
Pump probe sequence
Biological signature
Dead micro-organism
F0
Fm
t
F0
Fm
t
ΦII = 0

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018223132 A1